Europäisches Patentamt

European Patent Office

Office européen des brevets

(19)

(11) Veröffentlichungsnummer: **0 189 530**
**B1**

(12) **EUROPÄISCHE PATENTSCHRIFT**

(45) Veröffentlichungstag der Patentschrift: 05.09.90

(21) Anmeldenummer: 85113769.5

(22) Anmeldetag: 29.10.85

(51) Int. Cl.⁵: **F 16 B 13/14, E 04 B 1/61, E 04 B 2/82**

(54) Element zum Verankern von mit diesem vereinigbaren Wandteilen in der hinterschnittenen, einen Öffnungsschlitz aufweisenden Längsnut eines Aufnahmeteils.

(30) Priorität: 28.01.85 DE 3502728

(43) Veröffentlichungstag der Anmeldung:
06.08.86 Patentblatt 86/32

(45) Bekanntmachung des Hinweises auf die
Patenterteilung:
05.09.90 Patentblatt 90/36

(84) Benannte Vertragsstaaten:
AT BE CH DE FR GB IT LI NL

(56) Entgegenhaltungen:
CH-A- 922 864
FR-A-1 333 639
FR-A-2 484 501

(73) Patentinhaber: Rück, Hans-Peter
Heinkel-Strasse 35
D-7312 Kirchheim-Teck (DE)

(72) Erfinder: Rück, Hans-Peter
Heinkel-Strasse 35
D-7312 Kirchheim-Teck (DE)

Courier Press, Leamington Spa, England.

EP 0 189 530 B1

## Beschreibung

Die Erfindung bezieht sich auf ein Element zum Verankern von mit diesem vereinigbaren Wandteilen aus verformbarem Flachmaterial oder aus festem Material in einer hinterschnittenen, einen Öffnungsschlitz aufweisenden Längsnut eines Aufnahmeteil, wie es im Oberbegriff des Anspruchs 1 definiert ist.

Durch die FR-A-1 333 639 sind einteilige, u-förmig ausgebildete Klammern zum Anklemmen auf Blechkanten bekannt, die insbesondere zur Befestigung von Randleisten an Kraftfahrzeugen dienen. Die u-förmigen Klammern sind dabei mit drei über die Klammerwandungen überstehenden, schräg nach innen gerichteten Krallen versehen, von denen zwei an den Seitenkanten des einen Klammerschenkels und die dritte etwa in der Mitte des anderen Klammerschenkels vorgesehen sind. Mittels dieser Krallen erfolgt zunächst die Befestigung der Klammern auf der betreffenden Blechkante, danach wird über die Klammern eine die Blechkante überdeckende, mit schräg nach innen weisenden Stützkanten versehene Abdeckleiste geschoben. Die nach außen ragenden Abschnitte der Krallen dienen dabei dazu, die Abdeck-bzw. Randleiste auf den Klammern zu verankern. Dies geschieht dadurch, daß die Stützkanten der Abdeckleiste schließlich hinter die nach außen gerichteten Krallenabschnitte der u-förmigen Klammern gelangen.

Derartige, einteilig ausgestaltete Klammern eignen sich nicht zum Verankern von mit ihnen vereinigten Wandteilen in der hinterschittenen Längsnut eines starren Aufnahmeteils, deren Öffnungsschlitz breiter bemessen ist als die Stärke der Klammern. Die Funktion solcher Klammern erschöpft sich vielmehr darin, auf sie aufschiebbare, elastisch nachgiebige Abdeckbzw. Randleisten festzuhalten, wobei die Einheit Klammern-Abdeckleiste durch mittels Krallen bewirkter erhöhter Reibung auf der Blechkante fixiert ist.

Der Erfindung liegt die Aufgabe zugrunde, ein Element zum sicheren Verankern einer mit diesem vereinigten Warenbahn aus verformbarem Flachmaterial oder aus festem Material in der hinterschnittenen Längsnut eines Aufnahmeteils zu schaffen, deren Öffnungsschlitz breiter bemessen ist als die ursprüngliche Stärke des Elements, so daß das mit der betreffende Warenbahn vereinigte Element nicht von der Seite her, also in Längsrichtung, in die Längsnut im Aufnahmeteil eingeschoben werden muß, sondern von der Frontseite her in diese Nut eingeführt werden kann.

Diese Aufgabe ist durch ein Element gemäß dem Oberbegriff des Patentanspruchs 1 mit den erfindungsgemäßen Merkmalen im kennzeichnenden Teil dieses Anspruchs gelöst. Mit dieser Lösung wird eine einfache, zeitsparende und nur wenig Kraftaufwand erfordernde Verankerung des Elements mit der von diesem gehaltenen Warenbahn in der hinterschnittenen Längsnut des Aufnahmeteils ermöglicht.

Weiterbildungen und zweckmäßige Ausgestaltungen der Erfindung sind in den abhängigen Ansprüchen charakterisiert.

Ein Ausführungsbeispiel der Erfindung wird im nachstshenden anhand der Zeichnung erläutert.

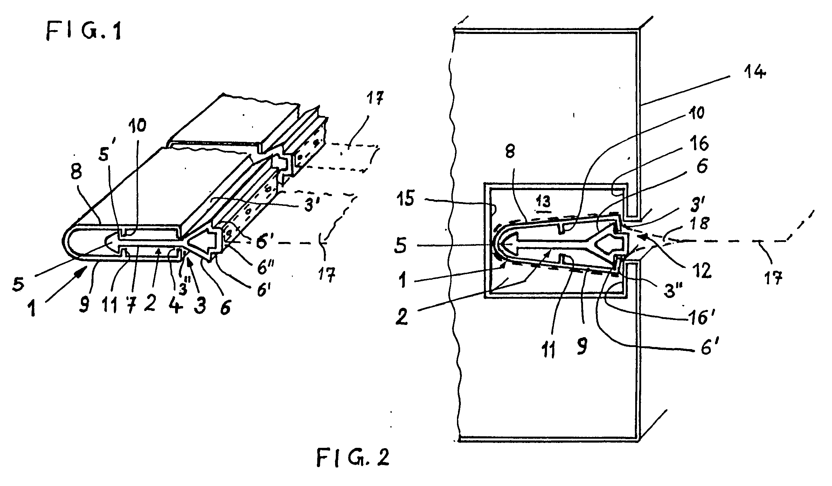

Es zeigen: Figur 1 eine Seitenansicht des Elements bei vereinigtem Kopf-und Heckteil im Ausgangs zustand und perspektivisch angedeuteter Längserstreckung,

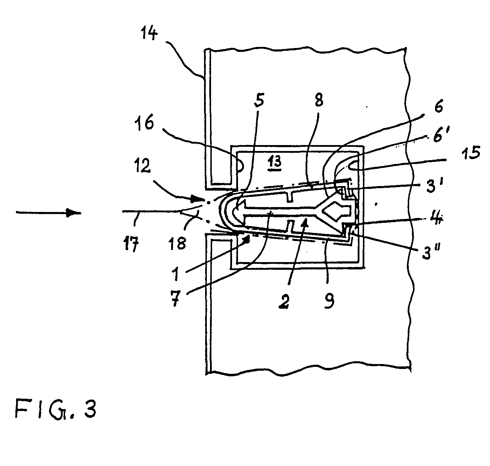

Figuren 2 und 3 ein Element gemäß Figur 1 in seiner Einführungsend-und Verriegelungslage in der Längsnut eines Aufnahmeteils, wobei das Element im Falle der Figur 3 umgekehrt, also mit dem Heckteil voraus, in die Nut eingeschoben ist.

Wie die Figuren 1 bis 3 erkennen lassen, besteht das Element aus einem als Hohlkörper ausgebildeten Kopfteil 1 und aus einem mit diesem lösbar vereinigten Heckteil 2. Das Kopfteil ist beim Ausführungsbeispiel etwa hohlkastenförmig ausgestaltet und an seiner heckseitig gelegenen Wandung 3 mit einem Einführschlitz 4 für das Heckteil versehen. Letzteres weist an seiner.

Frontseite eine keilartige Erweiterung 5 und in seinem rückwärtigen Bereich eine keilartige Erweiterung 6 auf, wobei die Keilstärke bzw. Keilhöhe der Erweiterung 6 größer bemessen ist als diejenige der Erweiterung 5. Beide Erweiterungen 5 und 6 besitzen Hinterschneidungen 5' und 6' und sind mittels eines Stegs 7 miteinander verbunden. An der Innenseite der beiden Seitenwandungen 8, 9 des Kopfteils ist jeweils wenigstens ein rippenförmiger Ansatz 10, 11 vorgesehen, von denen jeder nach innen ragt und in der Ausgangslage des Elements gemäß Figur 1 die frontseitige Erweiterung 5 des Heckteils 2 hintergreift. Die beiden Ansätze 10 und 11 dienen dabei gleichzeitig als Führung für den Steg 7 des Heckteils.

Wie Figur 2 zeigt, kommt beim Einschieben des Elements durch den Öffnungsschlitz 12 hindurch in das Innere der Längsnut 13 im Aufnahmeteil 14 die Frontseite des Kopfteils zur Anlage an die Innenwandung 15 der Längsnut, wodurch sich bei aufrechterhaltener Einschubkraft das Heckteil relativ zum Kopfteil verschiebt bzw. weiterbewegt. Infolge der dabei durch die keilartige Erweiterung 6 auf die Stirnseiten der beiden den Einführschlitz 4 begrenzenden Wandungsteile 3' und 3'' ausgeübten Keilwirkung werden diese Wandungsteile auseinandergedrückt. In der Endlage des Heckteils hinterfassen die beiden Wandungsteile 3' und 3'' des Kopfteils schließlich die Hinterschneidungen 6' der keilartigen Erweiterung 6. Damit ist das Heckteil innerhalb des Kopfteils in seiner Lage fixiert. Zugleich kommen die Wandungsteile 3' und 3'' des Kopfteils zur Anlage an die Innenseiten 16 und 16' der Längsnut 13, wodurch das Element gegen Herausziehen aus dem Öffnungsschlitz 12 der Längsnut 13 des Aufnahmeteils 14 gesichert ist.

Anstelle der beim Ausführungsbeispiel gewählten Hohlkastenform mit frontseitiger Abrundung kann das Kopfteil auch eine andere geeignete Hohl- bzw. Querschnittsform aufweisen, desgleichen kann das Heckteil entsprechend modifiziert werden. Wesentlich ist das Zusammenwirken des Kopf- und Heckteils im Sinne der Erfindung.

Als Werkstoff eignet sich je nach Anwendungsfall ein sogenannter harter oder weicher Kunststoff, beispielsweise spritzfähiges Hartoder Weich-PVC.

Das aus verformbarem Flachmaterial oder aus festem Material bestehende Wandteil 17 kann an der Rückseite 6'' der keilartigen Erweiterung 6 des Heckteils 1 befestigt werden. Die keilartige Erweiterung 6 kann gegebenenfalls auch ohne Hohlraum ausgeführt sein und Vollquerschnitt besitzen.

Im Falle aus verformbarem Flachmaterial, beispielsweise aus textilem Material, bestehenden Wandteilen 17 können diese mit einem Hohlsaum versehen sein, in welchen das Element eingeschoben wird. Ein solcher Hohlsaum ist in Fig. 2 gestrichelt angedeutet und mit 18 bezeichnet. In einem solchen Fall dient das Element beispielsweise als Keder bei der Verankerung von Markisen in der hinterschnittenen Nut einer Hohlwelle.

Im Falle der Figur 3 ist, anders als bei der Darstellung gemäß Figur 2, das Element umgekehrt in die Längsnut 13 des Aufnahmeteils 14 eingeschoben, das heißt, mit dem Heckteil 2 voraus (siehe Pfeilrichtung). Diese Einführart bietet sich insbesondere dann an, wenn mit einem Hohlsaum 18 versehene Materialbahnen 17, zum Beispiel in Form einer Markise oder dergleichen, in der Längsnut verankert werden sollen. Der Hohlsaumverlauf im Bereich des Öffnungsschlitzes der Längsnut ist in diesem Fall wegen der hier befindlichen Frontseite des Kopfteils günstiger. Ob das Element mit seinem Kopfteil 1 oder mit seinem Heckteil 2 voraus durch den Öffnungsschlitz 12 hindurch in die Längsnut des Aufnahmeteils eingeschoben werden soll, hängt von den jeweils gegebenen Voraussetzungen hinsichtlich der Beschaffenheit der zu verankernden Wandteile und der Ausbildung und Tiefe der Längsnut des Aufnahmeteils ab.

## Patentansprüche

1. Element zum Verankern von mit diesem vereinigbaren Wandteilen aus verformbarem Flachmaterial oder aus festem Material in einer hinterschnittenen, einen Öffnungsschlitz aufweisenden Längsnut eines Aufnahmeteils, in welche das Element einbringbar ist, wobei das Element durch den Öffnungsschlitz hindurch in das Innere der Längsnut einführbar ist und nach dem Einschieben in die Längsnut eine solche Konturenveränderung aufweist, die ein Herausziehen des Elements aus der Längsnut in Richtung quer zu deren Längserstreckung sicher verhindert, und wobei das Element aus einem als Hohlprofilkörper ausgebildeten Kopfteil (1) und aus einem mit diesem vereinigbaren, an seinem rückwärtigen Bereich eine keilartige, hinterschnittene Erweiterung (6) enthaltenden Heckteil (2) besteht, wobei der heckseitig gelegene Teil des Kopfteils einen Einführschlitz (4) für das Heckteil aufweist, der durch von Seitenwandungen (8, 9) des Kopfteils nach innen ragende, einander gegenüberliegende Wandungsteile (3, 3') gebildet ist, wobei die rückwärtige Erweiterung des Heckteils in montiertem Zustand des Elements das Kopfteil im Bereich des Schlitzes (4) aufweitet, wobei die Hinterschneidungen (6') der rückwärtigen Erweiterung des Heckteils von den beiden den Einführschlitz begrenzenden Wandungsteilen (3, 3') des Kopfteils hinterfaßt werden, dadurch gekennzeichnet, daß das Heckteil (2) an seiner Frontseite ebenfalls eine keilartige, hinterschnittene Erweiterung (5) aufweist, wobei die Keilstärke der rückwärtigen Erweiterung (6) größer bemessen ist als diejenige der frontseitigen Erweiterung (5), und daß das Kopfteil (1) an der Innenseite seiner beiden Seitenwandungen (8, 9) jeweils wenigstens einen nach innen ragenden rippenförmigen Ansatz (10, 11) besitzt, wobei diese Ansätze bei vereinigtem Kopf-und Heckteil die frontseitige Erweiterung des Heckteils hintergreifen und als Führung für einen die beider keilartigen Erweiterungen des Heckteils miteinander verbindenden Steg (7) dienen.

2. Element nach Anspruch 1, dadurch gekennzeichnet, daß das Kopfteil (1) als angenähert rechteckförmiger Hohlprofilkörper mit gerundeter Stirnseite ausgebildet ist.

3. Element nach einem der vorhergehenden Ansprüche, dadurch gekennzeichnet, daß es aus einem spritzfähigen Kunststoff besteht.

## Revendications

1. Elément pour la fixation de parties de murs en un matériau aplati déformable ou en un matériau rigide, solidarisables à l'aide dudit élément, dans une rainure longitudinale, contre-dépouillée et munie d'une fente ouverte, d'une partie d'attache dans laquelle l'élément est insérable, ledit élément pouvant être introduit dans l'espace interne de la rainure longitudinale à travers la fente ouverte et présentant, après l'insertion dans la rainure longitudinale, une variation de configuration propre à empêcher, à coup sûr, une extraction de l'élément hors de la rainure longitudinale, dans la direction transversale par rapport à l'étendue longitudinale de celle-ci, et l'élément comprenant une partie frontale (1) réalisée sous la forme d'un corps profilé creux, ainsi qu'une partie postérieure (2) qui peut être reliée à ladite partie frontale et comporte, dans sa région postérieure, un évasement (6) contre-dépouillé et en forme de coin, la zone située à l'arrière de la partie frontale présentant une fente (4) permettant l'introduction de la partie postérieure, et formée par des zones de paroi (3, 3') qui sont mutuellement opposées et dépassent, vers l'intérieur, à partir de parois latérales (8, 9) de la partie frontale, l'évasement postérieur de la partie postérieure élargissant la partie frontale, au voisinage de la fente (4), à l'état monté de l'élément, les contre-dépouilles (6') de l'évasement postérieur de la partie postérieure étant emprisonnées, par-derrière, par les deux zones de paroi (3, 3') de la partie frontale qui délimitent la fente d'introduction, caractérisé par le fait que la partie postérieure (2) comporte également, à sa face antérieure, un évasement (5) contre-dépouillé et en forme de coin, l'épaisseur du coin de l'évasement postérieur (6) étant dimensionnée plus grande que celle de l'évasement antérieur (5); et par le fait que la partie frontale (1) possède à chaque fois, sur la face interne de ses deux parois latérales (8, 9), au moins un appendice (10, 11) dépassant vers l'intérieur et revêtant la forme d'une nervure, ces appendices emprisonnant par-derrière l'évasement antérieur de la partie posté rieure, lorsque les parties frontale et postérieure sont reliées, et servant de guide pour une membrure (7) solidarisant les deux évasements cunéiformes de la partie postérleure.

2. Elément selon la revendication 1, caractérisé par le fait que la partie frontale (1) est réalisée sous la forme d'un corps profilé creux approximativement rectangulaire, muni d'une face extrême arrondie.

3. Elément selon l'une des revendications précédentes, caractérisé par le fait qu'il consiste en une matière plastique apte au moulage par injection.

**Claims**

1. Element for the anchoring of wall parts, which are unitable with this and of deformable flat material or of solid material, in an undercut longitudinal groove, which displays an opening slot and into which the element is bringable, of a receiving part, wherein the element is introduceable through the opening slot into the interior of the longitudinal groove and after the insertion into the longitudinal groove displays a change in outline such as securely prevents a drawing of the element out of the longitudinal groove in a direction transverse to its longitudinal extent, and wherein the element consists of a head part (1) constructed as hollow profile body and of a tail part (2), which is unitable therewith and at its rearward region contains a wedge-like undercut enlargement (6), wherein that part of the head part, which is disposed at the tail end, displays an introductory slot (4) for the tail part, which slot is formed by mutually opposite wall parts (3, 3') projecting inwardly through side walls (8, 9) of the head part, wherein the rearward enlargement of the tail part in the assembled state of the element expands the head part in the region of the slot (4), wherein the undercuts (6') of the rearward enlargement of the tail part are engaged behind by both the wall parts (3, 3') of the head part, which bound the introductory slot, characterised thereby, that the tail part (2) at its front side likewise displays a wedge-like undercut enlargement (5), wherein the wedge thickness of the rearward enlargement (6) is dimensioned to be greater than that of the frontal enlargement (5) and that the head part (1) at the inward side of both its side walls (8, 9) each time possesses at least one inwardly projecting rib-shaped projection (10, 11), wherein these projections, when the head part and the tail part are united, engage behind the frontal enlargement of the tail part and serve as guide for a web (7) connecting both the wedge-like enlargements of the tail part each with the other.

2. Element according to claim 1, characterised thereby, that the head part (1) is constructed as approximately rectangular hollow profile body with rounded end face.

3. Element according to one of the preceding claims, characterised thereby, that its consists of a synthetic material capable of being injection-moulded.

FIG.1

FIG. 2

EP 0 189 530 B1

FIG. 3